# EUROPEAN PATENT APPLICATION

(11) **EP 4 460 078 A1**
(43) Date of publication of application: **06.11.2024**
(21) Application number: 22914446.4
(22) Date of filing: 21.12.2022
(51) Int. Cl.: H04W 28/02, H04L 47/24

(54) **DATA TRANSMISSION METHOD AND APPARATUS, AND TERMINAL AND NETWORK DEVICE**

(30) Priority: 31.12.2021 CN 202111666621
(71) Applicant: Datang Mobile Communications Equipment Co., Ltd., Beijing 100085 (CN)
(72) Inventor: CHEN, Li, Beijing 100085 (CN)
(74) Representative: Maiwald GmbH
(86) International application number: PCT/CN2022/140677
(87) International publication number: WO 2023/125192

(57) **Abstract**

A data transmission method and an apparatus, and a terminal and a network device are provided. The method is performed by a network device and comprises: obtaining presentation requirement information of a target service; and when a plurality of QoS flows of the target service are transmitted to at least one terminal, lowering a QoS guarantee level of a target QoS flow or suspending transmission of the target QoS flow according to the presentation requirement information, wherein the target QoS flow is one or more of the plurality of QoS flows of the target service.

## Description

### CROSS-REFERENCE TO RELATED APPLICATIONS

The present disclosure claims a priority to Chinese Patent Application No. 202111666621.X filed in China on December 31, 2021, the present disclosure of which is incorporated herein by reference in its entirety.

### TECHNICAL FIELD

The present disclosure relates to the field of communication technologies, and in particular to a data transmission method and an apparatus, and a terminal and a network device.

### BACKGROUND

With development of audio and video technologies, an eXtended Reality (XR) service and a holographic service have gradually become a reality. When combined with a wireless communication technology, the XR service and the holographic service may be practically applied and promoted. A main characteristic of the XR service and the holographic service is huge amount of data and high delay requirements, and implementation of the XR service and the holographic service in a wireless communication system poses great challenges to both system capacities and delay reliability.

Based on a 3^{rd} Generation Partnership Project (3GPP) wireless access network, a Quality of Service (QoS) rule and a QoS parameters of service data are managed by a core network and transmitted to an access network node for execution. If the access network node cannot meet QoS requirements of the core network, it is considered to be unable to meet service requirements. For the holographic service and the XR service, from a perspective of the core network, it is necessary to meet all QoS requirements of QoS flows of the services, including delay, reliability, and assured bit rate requirements. Although this can achieve a best service presentation effectiveness, for a wireless access network, a single service requires a capacity of up to 1.5Gbps-1Tbps, which the wireless access network system cannot always satisfy. This limitation restrains the implementation and eventual commercialization of holographic and XR services in the wireless access network.

Holographic Type Communication (HTC) and the XR service are different from traditional service models by incorporating multi-flow and co-flow architectures with extremely high-rate demands. While traditional services ensure user experience through QoS guarantees, holographic and XR services necessitate considering the balance between resource occupancy and user experience.

### SUMMARY

An object of the present disclosure is to provide a data transmission method and an apparatus, and a terminal and a network device, so as to solve a problem on how to ensure service presentation effectiveness through reasonable utilization of wireless communication resources.

In order to solve above technical problems, the embodiments of the present disclosure provides a data transmission method performed by a network device, including: obtaining presentation requirement information of a target service; and when transmitting a plurality of QoS flows of the target service to at least one terminal, lowering a QoS guarantee level of a target QoS flow or suspending transmission of the target QoS flow according to the presentation requirement information, wherein the target QoS flow is one or more of the plurality of QoS flows of the target service.

Optionally, lowering the QoS guarantee level of the target QoS flow or suspending the transmission of the target QoS flow according to the presentation requirement information includes: determining a plurality of QoS flows and/or a plurality of QoS flow groups belonging to the target service, wherein each of the plurality of QoS flow groups includes at least one of the plurality of QoS flows; determining a target QoS flow group from the plurality of QoS flow groups according to the presentation requirement information, wherein the target QoS flow group is one or more of the plurality of QoS flow groups; and lowering the QoS guarantee level of the target QoS flow group, or suspending transmission of the target QoS flow group.

Optionally, the plurality of QoS flow groups is determined by at least one of: taking QoS flows presenting a same orientation as a group; grouping QoS flows according to different definitions presented; or taking QoS flows that interact with each other as a group.

Optionally, the presentation requirement information includes at least one of: location information of a user; a channel quality detection result; or user requirement information including whether the user allows a reduction in quality of service presentation, and/or whether the user requests a reduction in transmission rate.

Optionally, obtaining the presentation requirement information of the target service includes: receiving the presentation requirement information transmitted by the at least one terminal.

Optionally, transmitting the plurality of QoS flows of the target service to the at least one terminal includes one of: transmitting the plurality of QoS flows of the target service to one terminal; transmitting parts of the plurality of QoS flows of the target service to a plurality of terminals, respectively, to enable the plurality of terminals to jointly present the target service; and transmitting a part of the plurality of QoS flows of the target service to the at least one terminal, to enable the network device and the at least one terminal to jointly present the target service.

Optionally, after lowering the QoS guarantee level of the target QoS flow or suspending the transmission of the target QoS flow according to the presentation requirement information, the method further includes: in the case that there is a plurality of network devices that transmits the target service, transmitting current QoS information of the target service to other network devices, to enable the other network devices to synchronously update the QoS information of the target service.

Optionally, in the case of transmitting the plurality of QoS flows of the target service to the at least one terminal, the method further includes: carrying a group identity of each of the QoS flows by at least one of: carrying the group identity of each of the QoS flows on a data frame; carrying the group identity of each of the QoS flows on an Internet Protocol (IP) packet carrying the data frame; carrying the group identity of each of the QoS flows on a data packet of the QoS flow; and carrying the group identity of each of the QoS flows on a layer 2 packet of Radio Access Network (RAN).

The embodiments of the present disclosure also provides a data transmission method performed by a terminal, including: receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

Optionally, before receiving the plurality of QoS flows of the target service transmitted by the network device, the method further includes: transmitting presentation requirement information of the target service to the network device.

Optionally, the presentation requirement information includes at least one of: location information of a user; a channel quality detection result; or user requirement information including whether the user allows a reduction in quality of service presentation, and/or whether the user requests a reduction in transmission rate.

Optionally, the target QoS flow is a target QoS flow group determined from a plurality of QoS flow groups of the target service, wherein the target QoS flow group is one or more of the plurality of QoS flow groups.

Optionally, the plurality of QoS flow groups are determined by at least one of: taking QoS flows presenting a same orientation as a group; grouping QoS flows according to different definitions presented; or taking QoS flows that interact with each other as a group.

Optionally, after receiving the plurality of QoS flows of the target service transmitted by the network device, the method further includes: obtaining a group identity of each of the QoS flows by at least one of: obtaining a group identity of each of the QoS flows carried on a data frame; obtaining a group identity of each of the QoS flows carried on an IP packet carrying the data frame; obtaining a group identity of each of the QoS flows carried on a data packet of the QoS flow; or obtaining a group identity of each of the QoS flows carried on a layer 2 packet of a RAN.

The embodiment of the present disclosure also provides a network device including: a transceiver, a memory, a processor, and a computer program stored in the memory and used to be executed by the processor, wherein the processor is configured to read the program in the memory to implement the following: obtaining presentation requirement information of a target service; and when transmitting a plurality of QoS flows of the target service to at least one terminal, lowering a QoS guarantee level of a target QoS flow or suspending transmission of the target QoS flow according to the presentation requirement information.

Optionally, the processor is further configured to read the computer program in the memory to implement the following: determining a plurality of QoS flows and/or a plurality of QoS flow groups belonging to the target service, wherein each of the plurality of QoS flow groups includes at least one of the plurality of QoS flows; determining a target QoS flow group from the plurality of QoS flow groups according to the presentation requirement information, wherein the target QoS flow group is one or more of the plurality of QoS flow groups; and lowering the QoS guarantee level of the target QoS flow group, or suspending transmission of the target QoS flow group.

Optionally, the plurality of QoS flow groups are determined by at least one of: taking QoS flows presenting a same orientation as a group; grouping QoS flows according to different definitions presented; or taking QoS flows that interact with each other as a group.

Optionally, the presentation requirement information includes at least one of: location information of a user; a channel quality detection result; or user requirement information including whether the user allows a reduction in quality of service presentation, and/or whether the user requests a reduction in transmission rate.

Optionally, the processor is further configured to read the computer program in the memory to implement the following: receiving the presentation requirement information transmitted by the at least one terminal.

Optionally, the processor is further configured to read the computer program in the memory to perform at least one of the following: transmitting the plurality of QoS flows of the target service to a terminal; transmitting parts of the plurality of QoS flows of the target service to a plurality of terminals, respectively, to enable the plurality of terminals to jointly present the target service; or transmitting a part of the plurality of QoS flows of the target service to the at least one terminal, to enable the network device and the at least one terminal to jointly present the target service.

Optionally, the processor is further configured to read the computer program in the memory to implement the following: in the case that there is a plurality of network devices transmitting the target service, transmitting current QoS information of the target service to other network devices to enable the other network devices to synchronously update the QoS information of the target service.

Optionally, the processor is further configured to read the computer program in the memory to implement the following: carrying a group identity of each of the QoS flows by at least one of following methods: carrying the group identity of each of the QoS flows on a data frame; carrying the group identity of each of the QoS flows on an IP packet carrying the data frame; carrying the group identity of each of the QoS flows on a data packet of the QoS flow; or carrying the group identity of each of the QoS flows on a layer 2 packet of a RAN.

The embodiments of the present disclosure also provides a terminal including: a transceiver, a memory, a processor, and a computer program stored in the memory and used to be executed by the processor, wherein the processor is configured to read the program in the memory to implement the following: receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

Optionally, the processor is further configured to read the computer program in the memory to implement the following: transmitting presentation requirement information of the target service to the network device.

Optionally, the presentation requirement information includes at least one of: location information of a user; a channel quality detection result; or user requirement information including whether the user allows a reduction in quality of service presentation, and/or whether the user requests a reduction in transmission rate.

Optionally, the target QoS flow is a target QoS flow group determined from a plurality of QoS flow groups of the target service, wherein the target QoS flow group is one or more of the plurality of QoS flow groups.

Optionally, the plurality of QoS flow groups are determined by at least one of: taking QoS flows presenting a same orientation as a group; grouping QoS flows according to different definitions presented; or taking QoS flows that interact with each other as a group.

Optionally, after receiving the plurality of QoS flows of the target service transmitted by the network device, the method further includes: obtaining a group identity of each of the QoS flows by at least one of: obtaining a group identity of each of the QoS flows carried on a data frame; obtaining a group identity of each of the QoS flows carried on an IP packet carrying the data frame; obtaining a group identity of each of the QoS flows carried on a data packet of the QoS flow; or obtaining a group identity of each of the QoS flows carried on a layer 2 packet of a RAN.

The embodiments of the present disclosure also provides a data transmission apparatus applied to a network device, including: an obtaining module configured for obtaining presentation requirement information of a target service; and a first processing module configured for lowering a QoS guarantee level of a target QoS flow or suspending transmission of the target QoS flow according to the presentation requirement information when transmitting a plurality of QoS flows of the target service to at least one terminal, wherein the target QoS flow is one or more of the plurality of QoS flows of the target service.

The embodiments of the present disclosure also provides a data transmission apparatus applied to a terminal, including: a first receiving module configured for receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

The embodiments of the present disclosure also provide a processor-readable storage medium storing therein a computer program, wherein the computer program is used to be executed by a processor to implement the above method.

Beneficial effects of above-mentioned technical solutions of the present disclosure are as follows: in the above schemes, the presentation requirement information of the target service is obtained; and when the plurality of QoS flows of the target service are transmitted to the at least one terminal, the QoS guarantee level of the target QoS flow is lowered or the transmission of the target QoS flow according to the presentation requirement information is suspended, wherein the target QoS flow is one or more of the plurality of QoS flows of the target service. Through the above scheme, it is able to reduce overhead of an access network and increase capacities of the holographic service/the XR service in a wireless access network while ensuring the service presentation effectiveness.

### BRIEF DESCRIPTION OF THE DRAWINGS

Fig. 1 is a first flowchart of a data transmission method according to an embodiment of the present disclosure;
Fig. 2 is a second flowchart of the data transmission method according to an embodiment of the present disclosure;
Fig. 3 is a first structural block diagram of a data transmission apparatus according to an embodiment of the present disclosure;
Fig. 4 is a second structural block diagram of the data transmission apparatus according to the embodiment of the present disclosure;
Fig. 5 is a schematic structural diagram of a network device according to an embodiment of the present disclosure; and
Fig. 6 is a schematic structural diagram of a terminal according to an embodiment of the present disclosure.

### DETAILED DESCRIPTION

Technical solutions in the embodiments of the present disclosure will be clearly and completely described below in combination with the accompanying drawings in the embodiments of the present disclosure. Obviously, the described embodiments are merely a part of, rather than all of, the embodiments of the present disclosure. Based on the embodiments in the present disclosure, those of ordinary skill in the art may, without any creative effort, obtain other embodiments, which also fall within the scope of the present disclosure.

A term "and/or" in the embodiments of the present disclosure describes association relationship of associated objects, indicating that there may be three kinds of relationships, for example, A and/or B, which may indicate that there are three situations: A alone, A and B simultaneously, and B alone. A character "/" generally indicates that related objects before and after it are in an "or" relationship.

A term "a plurality of" in the embodiments of the present disclosure refers to two or more and other quantifiers are similar.

Terminal devices in the embodiments of the present disclosure may be a device providing voice and/or data connectivity to a user, a handheld device with a wireless connection function, or other processing device connected to a wireless modem, etc. In different systems, names of the terminal devices may also be different. For example, in a 5^{th} Generation Mobile Communication Technology (5G) system, the terminal device may be referred to as User Equipment (UE). A wireless terminal device may communicate with one or more Core Networks (CN) via a Radio Access Network (RAN). The wireless terminal device may be a mobile terminal device, such as a mobile phone (or a cellular phone), and a computer with a mobile terminal device, such as a portable, pocket-sized, hand-held, a built-in, or a vehicle-mounted mobile device, which exchanges language and/or data with a wireless access network. For example, a Personal Communication Service (PCS) phone, a cordless phone, a Session Initiated Protocol (SIP) phone, a Wireless Local Loop (WLL) station, a Personal Digital Assistant (PDA) or another device. The wireless terminal device may also be referred to as a system, a subscriber unit, a subscriber station, a mobile station, a mobile, a remote station, an access point, a remote terminal, an access terminal, a user terminal, a user agent, or a user device, which is not limited in the embodiments of the present disclosure.

The network device in the embodiments of the present disclosure may be a base station, which may include a plurality of cells providing services for terminals. According to different specific application scenarios, the base station may also be referred to as an access point, or may be a device in a access network that communicates with the wireless terminal device through one or more sectors over an air interface, or other names. The network device may be used to mutually exchange a received air frame with an Internet Protocol (IP) packet, serving as a router between the wireless terminal device and rest of the access network, which may include an Internet Protocol communication network. The network device may also coordinate attribute management of the air interface. For example, the network device in the embodiments of the present disclosure may be a Base Transceiver Station (BTS) in a Global System for Mobile communications (GSM) or Code Division Multiple Access (CDMA) system, or a NodeB in a Wide-band Code Division Multiple Access (WCDMA) system, an evolutional Node B (eNB or e-NodeB) in a long term evolution (LTE) system, a 5G base station (gNB) in a 5G network architecture (next generation system), or a Home evolved Node B (HeNB), a relay node, a femto base station, a pico base station, etc., which are not limited in the embodiments of the present disclosure. In some network architectures, the network device may include a Centralized Unit (CU) node and a Distributed Unit (DU) node, and the CU and the DU may also be geographically separated.

Multiple Input Multiple Output (MIMO) transmission may be carried out between the network device and the terminal device by using one or more antennas respectively, and the MIMO transmission may be Single User MIMO (SU-MIMO) or Multiple User MIMO (MU-MIMO). According to shape and number of antenna combinations, the MIMO transmission may be 2 Dimension Multi Input Multi Output (2D-MIMO), 3 Dimension Multi Input Multi Output (3D-MIMO), Full Dimension Multi-Input-Multi-Output (FD-MIMO), massive-MIMO, diversity transmission, pre-coding transmission or beamforming transmission.

Contents related to the solutions provided by the embodiments of the present disclosure are first introduced below.

### I. Holographic service

Implementation of the holographic service in the wireless network is to transmit a plurality of holographic service data flows through the wireless network, and these holographic service data flows are presented as holographic audio and video at a holographic service data presentation end.

Holographic service flow has following basic characteristics.
1. The holographic service includes independent depth layers and color layers, which may be split into different flows, and superposition of the different flows presents different definition effects.
2. A complete holographic service presentation is completed by a plurality of service flows from different angles. In other words, a plurality of flows from a specific angle may present a partial presentation effect of the holographic service, and flows from different angles finally form a complete presentation of the holographic service.

Taking a single flow of 4K (4096 × 2160) as a unit pixel, 5 × 5 holographic image data as an example, using a refresh rate of 60fps and a compression ratio of 100:1, at least 360 concurrent flows need to be supported to support holographic multi-dimensional stereoscopic presentation effects, and transmission peak bandwidth will reach an level of Tbps. In addition, in order to realize end-to-end immersive experience, end-to-end delay requirement of the holographic service is 5ms.

### II. XR Service

Extended Reality (XR) and Cloud Game (CG) are 5G media applications, and will be further developed in a 6^{th} Generation Mobile Communication Technology (6G). The XR is of different types, which represents all the combination of real and virtual environments and human-computer interactions generated by computer technologies and devices. It includes representative forms such as Augmented Reality (AR), Mixed Reality (MR) and Virtual Reality (VR). The XR service is similar to the holographic service in that it has requirements of low delay, high throughput and high reliability, and requires transmission of large data in a short time. For example, it is necessary to meet extremely high reliability and also require lower end-to-end delay, such as less than 1ms; for some XR services, a transmission requirement of at least 1.5Gbps is required. When 100 users apply the XR service at same time, required regional traffic density is about 13Mbps/m2. The XR service includes voice, motion, video and other different data flow types. Like the holographic service, presentation of the XR service is realized by a large number of service flows with different transmission characteristics and presentation requirements.

### III. QoS Architecture of 3GPP System

User Plane Function (UPF) entity of the core network manages QoS of the data packets from an application layer and transmits a QoS rule to an Access Node (AN) (such as a base station) and a terminal. In a downlink direction, the core network maps application layer data to a QoS flow according to the QoS rule (a QoS flow may be regarded as a pipeline for transmitting a type of application layer data, and each QoS flow includes a QoS flow Identity Document (QFI)), and transmits the QoS flow to an access network node, which maps the QoS flow, specifically maps the QoS flow to a Data Radio Bearer (DRB) and transmits it on an access network resource. In an uplink direction, the terminal maps the application layer data to the QoS flow according to the QoS rule, then maps the QoS flow to the DRB according to a configuration of the access network node, and transmits data over an air interface according to resource allocation of the access network node.

In simple terms, in a 3GPP wireless access network, QoS of the application layer data is managed by the core network, and the core network transmits the QoS rule and parameters (such as priority, delay, reliability, assured bit rate of the QoS flow, etc.) to the access network (including the base station and the terminal). The access network transmits service data according to the QoS rule and the QoS parameters indicated by the core network, and if the QoS requirements transmitted by the core network are met, it is considered that data requirements of a service layer are met. That is, QoS parameter requirements of the service layer for the QoS flow are mandatory for the access network.

However, Holographic Type Communication (HTC) and the XR service are different from traditional service models, which introduce multi-flow and co-flow, with extremely high flow rate requirements. While traditional services ensure user experience through Quality of Service (QoS), holographic and XR services require a balance between resource utilization and user experience.

Based on the above, the embodiments of the present disclosure provides a data transmission method and an apparatus, and a terminal and a network device, so as to solve a problem on how to ensure a service presentation effectiveness through reasonable occupation of wireless communication resources.

The method and the apparatus are conceived based on a same inventive concept. Since principles of solving problems by the methods and the apparatuses are similar, their implementations may refer to each other, and repetitions will not be further elaborated herein.

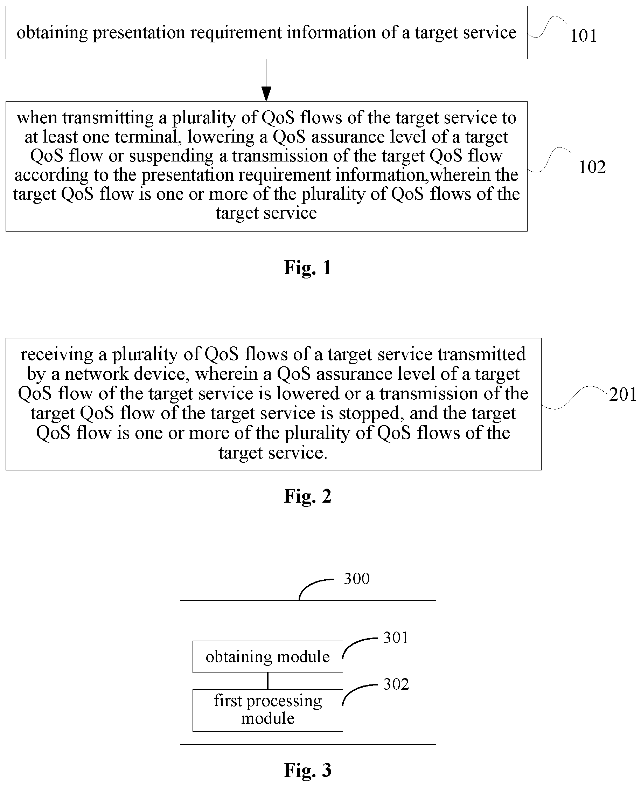

Referring to Fig. 1, an embodiment of the present disclosure provides a data transmission method performed by a network device, including the following steps.

Step 101: obtaining presentation requirement information of a target service.

In this step, types of the target service may include the holographic service or the XR service.

Specifically, the presentation requirement information includes at least one of:
location information of a user;
a channel quality detection result; or
user requirement information including whether the user allows a reduction in quality of service presentation, and/or whether the user requests a reduction in transmission rate.

The location information of the user may be specifically expressed as coordinates of the user, sight of the user, or service presentation angle corresponding to the location that the user is facing (such as an angle number or specific direction information).

It should be noted that the obtaining the location information of the user includes: the location information is sensed by sensors that have information interaction with the terminal or the network device (such as the base station); or the location information is determined by a terminal receiving the service; alternatively, when the network device cannot directly sense a location of the user, it may also include: receiving location information of the user reported by a location sensor or a terminal that can sense the location information of the user.

It should be understood that the presentation requirement information may be understood as requirement information of a target node or a target user for at least one QoS flow, and the requirement information includes at least one of: a flow rate requirement of the target node or the target user for the at least one QoS flow, a delay requirement of the target node or the target user for the at least one QoS flow, a reliability requirement of the target node or the target user for the at least one QoS flow, or the like.

Step 102: when transmitting a plurality of QoS flows of the target service to at least one terminal, lowering a QoS guarantee level of a target QoS flow or suspending a transmission of the target QoS flow according to the presentation requirement information, wherein the target QoS flow is one or more of the plurality of QoS flows of the target service.

For example, in a case where the presentation requirement information includes the location information of the user, QoS flow corresponding to the sight of the user is transmitted according to an optimal QoS guarantee, and the QoS guarantee of the QoS flow opposite to the sight of the user is reduced (such as transmitting at a lower rate, or only transmitting some necessary frames), or transmission of the QoS flow opposite to the sight of the user is suspended.

For example, in a case where the presentation requirement information includes the channel quality detection result, QoS guarantee of a part of the QoS flow is reduced according to the channel quality detection result, such as reducing a presentation definition of a part of the service, reducing transmission rate and delay assurance of a part of the QoS flow, etc.

In the embodiments, when the plurality of QoS flows of the target service is transmitted to the at least one terminal, the QoS guarantee level of the target QoS flow is lowered or the transmission of the target QoS flow is suspended according to the presentation requirement information. In this way, user's service experience can be assured under a condition of high bandwidth requirements and limited resources, and service capacities can be increased under a condition of certain resources, such as a plurality of HTC or XR services may be served at a same time. Therefore, the embodiments of the present disclosure can reduce access network overhead and increase capacities of the holographic service/XR service in the wireless access network while ensuring the service presentation effectiveness for specific users, which is beneficial to the commercialization of the holographic service/XR service.

Optionally, when the plurality of QoS flows of the target service is transmitted to the at least one terminal, if it is determined that the QoS flow data transmission of the target service needs to be carried out in a way of saving air interface resources or increasing system capacities, it lowers a QoS guarantee level of a target QoS flow or suspends transmission of the target QoS flow according to the presentation requirement information.

It should be noted that, in the present disclosure, the description is provided with a model where it assumes that an IP flow is mapped to the QoS flow and the service is transmitted by QoS flow over the air interface. If the service flow is mapped to other flow models over the air interface, the "QoS flow" in the present disclosure may be directly replaced with a corresponding flow name as long as a flow type has characteristics that different flows reflect different service flows of different layers or angles.

In an embodiment, the lowering the QoS guarantee level of the target QoS flow or suspending the transmission of the target QoS flow according to the presentation requirement information includes:
determining a plurality of QoS flows and/or a plurality of QoS flow groups belonging to the target service, wherein each of the plurality of QoS flow groups includes at least one of the plurality of QoS flows;
determining a target QoS flow group from the plurality of QoS flow groups according to the presentation requirement information, wherein the target QoS flow group is one or more of the plurality of QoS flow groups; and
lowering the QoS guarantee level of the target QoS flow group, or suspending transmission of the target QoS flow group.

The plurality of QoS flow groups is determined by at least one of:
taking QoS flows presenting a same orientation as a group;
grouping QoS flows according to different definitions presented; or
taking QoS flows that interact with each other as a group.

In this embodiment, the QoS flows presenting a same orientation may be considered as a group, such as dividing 360 degrees into N orientations, QoS flows in a same orientation are taken as a group; or the QoS flows are grouped according to different definitions presented; or QoS flows that interact with each other are taken as a group, such as audio-video flows in a specific direction triggered by a specific action flow are taken as a group. The embodiment can realize that the target QoS flow group is determined from the plurality of QoS flow groups according to the presentation requirement information, and thus, the target QoS flow can be conveniently determined and a processing efficiency can be improved while ensuring the service presentation effectiveness for a specific user and reducing the access network overhead.

In an embodiment, obtaining the presentation requirement information of the target service includes:
receiving the presentation requirement information transmitted by at least one terminal.

For example, in a case of a plurality of receiving terminals, each of the terminals transmits respective presentation requirement information to the network device, so that the network device transmits at least a part of the QoS flow of the target service to each terminal according to the presentation requirement information.

In this embodiment, the presentation requirement information of the target service is obtained and reported to the network device through the terminal, so that the network device determines the target QoS flow according to the presentation requirement information, and lowers the QoS guarantee level of the target QoS flow group, or suspends the transmission of the target QoS flow group.

In an embodiment, transmitting the plurality of QoS flows of the target service to the at least one terminal includes one of:
transmitting the plurality of QoS flows of the target service to one terminal;
transmitting parts of the plurality of QoS flows of the target service to a plurality of terminals, respectively, to enable the plurality of terminals to jointly present the target service; or
transmitting a part of the plurality of QoS flows of the target service to the at least one terminal, to enable the network device and the terminal to jointly present the target service.

In this embodiment, transmission models of the target service includes: the network device transmits a plurality of QoS flows belonging to a same service to one terminal, and the terminal performs service presentation after receiving QoS flow data; the base station transmits the plurality of QoS flows belonging to the same service to the plurality of terminals, which jointly present the service; the base station transmits parts of the plurality of QoS flows belonging to the same service to one or more terminals, and the base station and the terminals present the service together (this method is suitable for indoor micro base stations).

The parts of the plurality of QoS flows transmitted to the plurality of terminals may be identical or different.

In an embodiment, after step 102, the method further includes:
in the case that there is a plurality of network devices that transmits the target service, transmitting current QoS information of the target service to other network devices, to enable the other network devices to synchronously update the QoS information of the target service.

In this embodiment, in the case that there is the plurality of network devices that transmits the target service, information exchange is carried out among base stations to determine a plurality of base stations transmitting a same target service, and synchronous update of QoS information is carried out among the base stations, such as synchronous update of time delay, reliability, assured transmission rate, etc. In this way, the plurality of QoS flows of the target service can be assured simultaneously.

In an embodiment, the method further includes: carrying a group identity of each of the QoS flows by at least one of following four methods.

Method 1: carrying the group identity of each of the QoS flows on a data frame.

Specifically, an application layer of a network side or an application layer of the terminal adds a group identify of the QoS flows to the data frame.

Method 2: carrying the group identity of each of the QoS flows on an IP packet carrying the data frame.

Specifically, the core network adds the group identify of the QoS flows to a data packet of the QoS flow.

Method 3: carrying the group identity of each of the QoS flows on the data packet of the QoS flow.

Method 4: carrying the group identity of each of the QoS flows on a layer 2 packet of a RAN

Specifically, according to instructions of the core network or the application layer, the base station adds the group identify of the QoS flow to the QoS flow group or the layer 2 packet of the RAN, such as the Packet Data Convergence Protocol (PDCP) or the Protocol Data Unit (PDU).

Referring to Fig. 2, an embodiment of the present disclosure provides a data transmission method performed by a terminal, including the following steps.

Step 201, receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

In this embodiment, when the network device transmits the plurality of QoS flows of the target service to the terminal, the QoS guarantee level of the target QoS flow is lowered or the transmission of the target QoS flow is suspended according to the presentation requirement information, and a QoS guarantee level of a part of a plurality of QoS flows of a target service received by the terminal is lowered or the transmission of the part of the plurality of QoS flows of the target service received by the terminal is stopped. In this way, the user's service experience can be assured under a condition of high bandwidth requirements and limited resources, and service capacities can be increased under a condition of certain resources, such as a plurality of HTC or XR services may be served at a same time. Therefore, in the embodiments of the present disclosure, it can reduce access network overhead and increase capacities of the holographic service/XR service in the wireless access network while ensuring the service presentation effectiveness for specific users, which is beneficial to the commercialization of the holographic service/XR service.

In an embodiment, before step 201, the method further includes:
transmitting presentation requirement information of the target service to the network device.

The presentation requirement information includes at least one of:
location information of the user;
a channel quality detection result; or
user requirement information including whether the user allows a reduction in quality of service presentation, and/or whether the user requests a reduction in transmission rate.

In this embodiment, each terminal transmits the presentation requirement information to the network device, so that the network device transmits at least a part of the QoS flow of the target service to the terminal according to the presentation requirement information.

In an embodiment, the target QoS flow is a target QoS flow group determined from a plurality of QoS flow groups of the target service, wherein the target QoS flow group is one or more of the plurality of QoS flow groups.

Specifically, the plurality of QoS flow groups are determined by at least one of:
taking QoS flows presenting a same orientation as a group;
grouping QoS flows according to different definitions presented; or
taking QoS flows that interact with each other as a group.

In an embodiment, after receiving the plurality of QoS flows of the target service transmitted by the network device, the method further includes:
obtaining a group identity of each of the QoS flows by at least one of:
Method 1: obtaining a group identity of each of the QoS flows carried on a data frame
Method 2: obtaining a group identity of each of the QoS flows carried on an IP packet carrying the data frame;
Method 3: obtaining a group identity of each of the QoS flows carried on a data packet of the QoS flow; or
Method 4: obtaining a group identity of each of the QoS flows carried on a layer 2 packet of a RAN.

Hereinafter the data transmission method of the present disclosure will be introduced for three different transmission models between the base station and the terminal.

### Example 1: a transmission model of one base station and one terminal

1) At a base station side, it mainly includes following steps.
   Step 1: determining a plurality of QoS flows and QoS flow groups belonging to a same service, wherein QoS flows in one QoS flow group need to carry out QoS guarantee at same time, including delay, reliability, assured rate, etc.
   Step 2: receiving by the base station the location information of the user transmitted by the location sensor or the terminal, wherein the location information of the user may be specifically expressed as coordinates of the user, sight of the user, or service presentation angle corresponding to the location that the user is facing (such as angle number or specific direction information).
   Step 3: determining by the base station whether QoS flow data transmission of the service needs to be carried out in a manner of saving air interface resources or increasing system capacities; if it is, according to the location information of the user, data packet transmission quality of QoS flow groups from angles that cannot be directly sensed by the user is reduced (for example, reducing transmission rate or not transmitting a part of QoS flows that enhance service presentation effectiveness), or a data packet of QoS flow groups from partial angles is not transmitted.
   Step 4: updating, by the base station, QoS flow groups transmitted with a high quality and QoS flow groups transmitted with a reduced quality according to update of the location information of the user, so as to ensure service presentation quality sensed by the user.
2) A terminal side mainly includes following steps:
   Step 1: receiving a configuration of the core network or the base station side, and determining a QoS flow and a QoS flow group belonging to a same service.
   Step 2 (optional): sensing the user location and reporting to the base station the location information of the user, such as user coordinates or user orientation.
   Step 3: receiving data packets of a plurality of QoS flows transmitted by the base station side, and presenting them on the terminal or transmitting them to a presentation device for service presentation.

### Example 2: a transmission model of one base station and a plurality of terminals

1) The base station side mainly includes following steps.
   Step 1: determining a plurality of QoS flows and QoS flow groups belonging to a same service, wherein QoS flows in one QoS flow group need to carry out QoS guarantee at same time, including delay, reliability, assured rate, etc., and determining receiving terminals of different QoS flow groups.
   Step 2: receiving by the base station the location information of the user transmitted by the location sensor or a user location positioning terminal (which may be an anchor terminal), wherein the location information of the user may be specifically expressed as coordinates of the user, sight of the user, or service presentation angle corresponding to the location that the user is facing (such as angle number or specific direction information).
   Step 3: determining by the base station whether the QoS flow data transmission of the service needs to be carried out in a manner of saving the air interface resources or increasing the system capacities; if it is, according to the location information of the user, a QoS flow group that may reduce transmission quality (for example, reducing the transmission rate or not transmitting a part of QoS flows that enhance the service presentation effectiveness) is determined, or the data packet of the QoS flow groups from partial angles is not transmitted, and a QoS flow that adjusts a QoS guarantee target and a QoS flow that provides a QoS guarantee target according to application layer requirements are transmitted to a terminal corresponding to the QoS flow group.
   Step 4: updating, by the base station, QoS flow groups transmitted with a high quality and QoS flow groups transmitted with a reduced quality according to update of the location information of the user, and transmitting data of the QoS flow to corresponding terminal based on an adjusted transmission strategy, so as to ensure service presentation quality sensed by the user.
2) the terminal side mainly includes following steps.
   Step 1: receiving the configuration of the core network or the base station side, and determining the QoS flow and the QoS flow group belonging to a same service, wherein one user may only receive a part of the QoS flow of one service.
   Step 2 (optional): sensing the user location and reporting the location information of the user to the base station, such as the user coordinates or the orientation. Optionally, the location information of the user is transmitted to another terminal.
   Step 3: receiving data packets of QoS flows belonging to a same service transmitted by the base station side, and presenting them on the terminal or transmitting them to the presentation device for service presentation, wherein one terminal may present only a part of the service, such as one angle of a holographic service.

### Example 3: a transmission model of a plurality base stations and a plurality terminals

1) The base station side mainly includes following steps:
   Step 1: determining the plurality of QoS flows and the QoS flow groups belonging to a same service, wherein the QoS flows in one QoS flow group need to carry out QoS guarantee at same time, including delay, reliability, assured rate, etc., and determining the receiving terminals of different QoS flow groups.
      Optionally, information exchange is carried out between the base stations to determine a plurality of base stations transmitting a same service, and QoS information synchronization between base stations is carried out.
   Step 2: receiving, by the base station, the location information of the user transmitted by the location sensor, the user location positioning terminal (e.g. an anchor terminal) or another base station, wherein the location information of the user may be specifically expressed as coordinates of the user, sight of the user, or service presentation angle corresponding to the location that the user is facing (such as angle number or specific direction information).
   Step 3: determining by the base station whether the QoS flow data transmission of the service needs to be carried out in a manner of saving the air interface resources or increasing the system capacities; if it is, according to the location information of the user, a QoS flow group that may reduce transmission quality (for example, reducing the transmission rate or not transmitting a part of QoS flows that enhance the service presentation effectiveness) is determined, or the data packet of the QoS flow groups from partial angles is not transmitted, and a QoS flow that adjusts a QoS guarantee target and a QoS flow that provides a QoS guarantee target according to application layer requirements are transmitted to a terminal corresponding to the QoS flow group.
   Step 4: updating, by the base station, QoS flow groups transmitted with a high quality and QoS flow groups transmitted with a reduced quality according to update of the location information of the user, and transmitting data of the QoS flow to a corresponding terminal based on an adjusted transmission strategy, so as to ensure service presentation quality sensed by the user.
2) the terminal side mainly includes following steps.

Step 1: receiving the configuration of the core network or the base station side, and determining the QoS flow and the QoS flow group belonging to a same service, wherein one user may only receive a part of the QoS flow of one service, and may receive different QoS flows belonging to a same service from one or more base stations.

Step 2 (optional): sensing the user location and reporting the location information of the user to the base station, such as the user coordinates or the orientation. Optionally, the location information of the user is transmitted to another terminal.

Step 3: receiving data packets of QoS flows belonging to a same service transmitted by the base station side, and presenting them on the terminal or transmitting them to the presentation device for service presentation, wherein one terminal may present only a part of the service, such as one angle of a holographic service.

It should be noted that a process of adjusting QoS flow transmission based on other user requirements is similar and a pertinent embodiment is not repeatedly provided. The QoS flow in the present disclosure is of a flow channel mode in a current 5G standard, in which the service data packets enter the access network after the service data packets is decomposed, and if other flow channel names are adopted for decomposing the service data packets to enter the access network in future, the present disclosure is still applicable.

Referring to Fig. 3, the present disclosure further provides a data transmission apparatus 300 applied to a network device, including:
an obtaining module 301 configured for obtaining presentation requirement information of a target service; and
a first processing module 302 configured for lowering a QoS guarantee level of a target QoS flow or suspending transmission of the target QoS flow according to the presentation requirement information when transmitting a plurality of QoS flows of the target service to at least one terminal; wherein the target QoS flow is one or more of the plurality of QoS flows of the target service.

Optionally, the first processing module 302 includes:
a first processing sub-module configured for determining a plurality of QoS flows and/or a plurality of QoS flow groups belonging to the target service, wherein each of the plurality of QoS flow groups includes at least one of the plurality of QoS flows;
a second processing sub-module configured for determining a target QoS flow group from the plurality of QoS flow groups according to the presentation requirement information, wherein the target QoS flow group is one or more of the plurality of QoS flow groups; and
a third processing sub-module configured for lowering the QoS guarantee level of the target QoS flow group, or suspending transmission of the target QoS flow group.

Optionally, the plurality of QoS flow groups is determined by at least one of:
taking QoS flows presenting a same orientation as a group;
grouping QoS flows according to different definitions presented; or
taking QoS flows that interact with each other as a group.

Optionally, the presentation requirement information includes at least one of:
location information of a user;
a channel quality detection result; or
user requirement information including whether the user allows a reduction in quality of service presentation, and/or whether the user requests a reduction in transmission rate.

Optionally, the obtaining module 301 includes:
a first obtaining sub-module configured for receiving the presentation requirement information transmitted by at least one terminal.

Optionally, the apparatus 300 further includes a transmitting module for one of:
transmitting the plurality of QoS flows of the target service to one terminal;
transmitting parts of the plurality of QoS flows of the target service to a plurality of terminals, respectively, to enable the plurality of terminals to jointly present the target service; or
transmitting a part of the plurality of QoS flows of the target service to the at least one terminal, to enable the network device and the at least one terminal to jointly present the target service.

Optionally, the apparatus 300 further includes:
a second processing module configured for, in the case that there is a plurality of network devices that transmits the target service, transmitting current QoS information of the target service to other network devices, to enable the other network devices to synchronously update the QoS information of the target service.

Optionally, the apparatus 300 further includes:
a third processing module configured for carrying a group identity of each of the QoS flows by at least one of:
carrying the group identity of each of the QoS flows on a data frame;
carrying the group identity of each of the QoS flows on an IP packet carrying the data frame;
carrying the group identity of each of the QoS flows on a data packet of the QoS flow; or
carrying the group identity of each of the QoS flows on a layer 2 packet of a RAN.

It should be noted here that the apparatus provided by the embodiments of the present disclosure can realize all method steps of the method embodiments of the network device side and can achieve a same technical effect, and parts and beneficial effects of the apparatus embodiments which are same as those of the method embodiments in the present embodiment will not be detailed here.

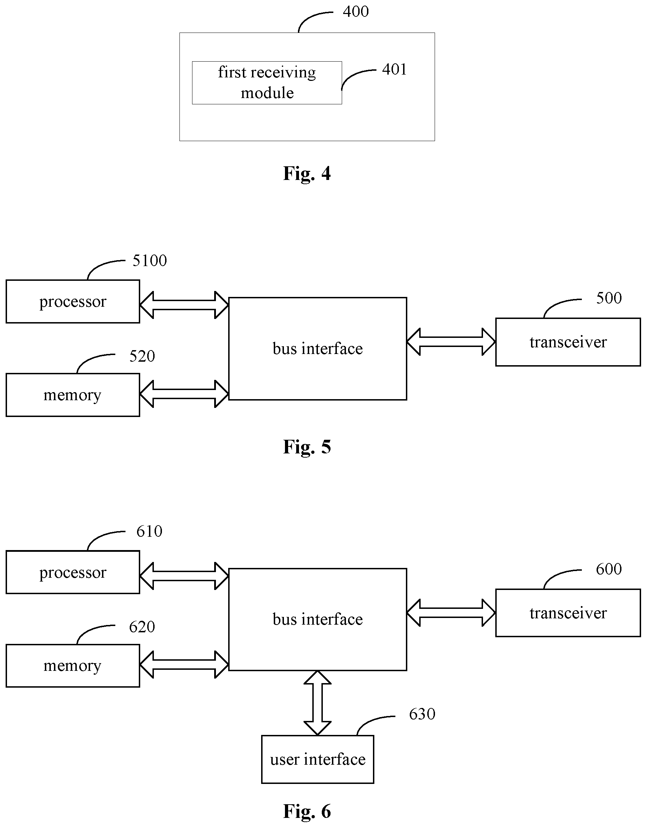

Referring to Fig. 4, the present disclosure further provides a data transmission apparatus 400 applied to a terminal, including:
a first receiving module 401 configured for receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

Optionally, the apparatus 400 further includes:
a requirement information transmitting module configured for transmitting presentation requirement information of the target service to the network device.

Optionally, the presentation requirement information includes at least one of:
location information of a user;
a channel quality detection result; or
user requirement information including whether the user allows a reduction in quality of service presentation, and/or whether the user requests a reduction in transmission rate.

Optionally, the target QoS flow is a target QoS flow group determined from a plurality of QoS flow groups of the target service, wherein the target QoS flow group is one or more of the plurality of QoS flow groups.

Optionally, the plurality of QoS flow groups is determined by at least one of:
taking QoS flows presenting a same orientation as a group;
grouping QoS flows according to different definitions presented; or
taking QoS flows that interact with each other as a group.

Optionally, the apparatus 400 further includes:
a group identity obtaining module configured for obtaining a group identity of each of the QoS flows by at least one of:
obtaining a group identity of each of the QoS flows carried on a data frame;
obtaining a group identity of each of the QoS flows carried on an IP packet carrying the data frame;
obtaining a group identity of each of the QoS flows carried on a data packet of the QoS flow; or
obtaining a group identity of each of the QoS flows carried on a layer 2 packet of a RAN.

It should be noted here that the apparatus provided by the embodiments of the present disclosure can realize all method steps of the method embodiments of the terminal side and can achieve a same technical effect, and parts and beneficial effects of the apparatus embodiments which are same as those of the method embodiments in the present embodiment will not be detailed herein.

Referring to Fig. 5, an embodiment of the present disclosure provides a network device including: a transceiver 500, a memory 520, a processor 510, and a computer program stored on the memory 520 and operable on the processor 510, wherein the processor 510 is configured to read the program in the memory 520 to implement the following:
obtaining presentation requirement information of a target service; and
when transmitting a plurality of QoS flows of the target service to at least one terminal, lowering a QoS guarantee level of a target QoS flow or suspending transmission of the target QoS flow according to the presentation requirement information; wherein the target QoS flow is one or more of the plurality of QoS flows of the target service.

The transceiver 500 is configured for receiving and transmitting data under control of the processor 510.

In Fig. 5, a bus architecture may include any number of buses and bridges connected to each other, so as to connect various circuits by one or more processors such as the processor 510 and one or more memories such as the processor 520. In addition, the bus architecture may be used to connect various other circuits, such as a circuit for a peripheral device, a circuit for a voltage stabilizer and a power management circuit, which are known in the art and will not be further described herein. The bus interface may be provided, and the transceiver 500 may consist of a plurality of elements, i.e., a transmitter and a receiver for communication with various other devices over a transmission medium, including a wireless channel, a wired channel, an optical cable, and other transmission media. The processor 510 is responsible for managing the bus architecture and general processing, and the memory 520 may store data used by the processor 510 when performing operations.

The processor 510 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Optionally, the processor is further configured to read the computer program in the memory to implement the following:
determining a plurality of QoS flows and/or a plurality of QoS flow groups belonging to the target service, wherein each of the plurality of QoS flow groups includes at least one of the plurality of QoS flows;
determining a target QoS flow group from the plurality of QoS flow groups according to the presentation requirement information, wherein the target QoS flow group is one or more of the plurality of QoS flow groups; and
lowering the QoS guarantee level of the target QoS flow group, or suspending transmission of the target QoS flow group.

Optionally, the plurality of QoS flow groups is determined by at least one of:
taking QoS flows presenting a same orientation as a group;
grouping QoS flows according to different definitions presented; or
taking QoS flows that interact with each other as a group.

Optionally, the presentation requirement information includes at least one of:
location information of a user;
a channel quality detection result; or
user requirement information including whether the user allows a reduction in quality of service presentation, and/or whether the user requests a reduction in transmission rate.

Optionally, the processor is further configured to read the computer program in the memory to implement the following:
receiving the presentation requirement information transmitted by the at least one terminal.

Optionally, the processor is further configured to read the computer program in the memory to perform at least one of the following:
transmitting the plurality of QoS flows of the target service to one terminal;
transmitting parts of the plurality of QoS flows of the target service to a plurality of terminals, respectively, to enable the plurality of terminals to jointly present the target service; or
transmitting a part of the plurality of QoS flows of the target service to the at least one terminal, to enable the network device and the at least one terminal to jointly present the target service.

Optionally, the processor is further configured to read the computer program in the memory to implement the following:
in the case that there is a plurality of network devices that transmits the target service, transmitting current QoS information of the target service to another network device, to enable the other network device to synchronously update the QoS information of the target service.

Optionally, the processor is further configured to read the computer program in the memory to implement the following:
carrying a group identity of each of the QoS flows by at least one of:
carrying the group identity of each of the QoS flows on a data frame;
carrying the group identity of each of the QoS flows on an IP packet carrying the data frame;
carrying the group identity of each of the QoS flows on a data packet of the QoS flow; or
carrying the group identity of each of the QoS flows on a layer 2 packet of a RAN.

Referring to Fig. 6, an embodiment of the present disclosure also provide a terminal including: a transceiver 600, a memory 620, a processor 610, and a computer program stored on the memory 620 and operable on the processor 610; wherein the processor 610 is configured to read the program in the memory to implement the following:
receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

The transceiver 600 is configured for receiving and transmitting data under control of the processor 610.

In Fig. 6, a bus architecture may include any number of buses and bridges connected to each other, so as to connect various circuits by one or more processors such as the processor 610 and one or more memories such as the processor 620. In addition, the bus architecture may be used to connect various other circuits, such as a circuit for a peripheral device, a circuit for a voltage stabilizer and a power management circuit, which are known in the art and will not be further described herein. The bus interface may be provided, and the transceiver 600 may consist of a plurality of elements, i.e., a transmitter and a receiver for communication with various other apparatuses over a transmission medium, including a wireless channel, a wired channel, an optical cable, and other transmission media. With respect to different UEs, the user interface 630 may also be provided for devices which are to be arranged inside or outside the UE, and these devices may include but not limited to a keypad, a display, a speaker, a microphone and a joystick.

The processor 610 is responsible for managing the bus architecture and general processing, and the memory 620 may store data used by the processor 610 when performing operations.

Optionally, the processor 610 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

Optionally, the presentation requirement information includes at least one of:
location information of a user;
a channel quality detection result; or
user requirement information including whether the user allows a reduction in quality of service presentation, and/or whether the user requests a reduction in transmission rate.

Optionally, the processor 610 is further configured to read the computer program in the memory to implement the following:
transmitting presentation requirement information of the target service to the network device.

Optionally, the target QoS flow is a target QoS flow group determined from a plurality of QoS flow groups of the target service, wherein the target QoS flow group is one or more of the plurality of QoS flow groups.

Optionally, the plurality of QoS flow groups is determined by at least one of:
taking QoS flows presenting a same orientation as a group;
grouping QoS flows according to different definitions presented; or
taking QoS flows that interact with each other as a group.

Optionally, the processor 610 is further configured to read the computer program in the memory to implement the following:
obtaining a group identity of each of the QoS flows by at least one of:
obtaining a group identity of each of the QoS flows carried on a data frame;
obtaining a group identity of each of the QoS flows carried on an IP packet carrying the data frame;
obtaining a group identity of each of the QoS flows carried on a data packet of the QoS flow; or
obtaining a group identity of each of the QoS flows carried on a layer 2 packet of a RAN.

The processor is configured to execute any of the methods provided by the embodiments of the present disclosure according to the obtained executable instructions by calling a computer program stored in the memory. The processor and the memory may also be physically arranged separately.

It should be noted that division of units in the embodiments of the present disclosure is schematic and is only a logical function division, and there may be another division method in actual implementation. In addition, functional units in the embodiments of the present disclosure may be integrated into one processing unit, or may physically exist separately, or two or more functional units may be integrated into one unit. The integrated units may be implemented in a form of hardware or software functional units.

When the integrated units are implemented in a form of software functional units and sold or used as independent products, they may be stored in a processor-readable storage medium. Based on this understanding, the technical solution of the present disclosure essentially, or a part that contributes to the related art, or all or a part of the technical solution may be embodied in a form of a software product. The computer software product is stored in a storage medium and includes instructions for causing a computer device (for example, a personal computer, a server, or a network device) or a processor to perform all or a part of the steps of the method described in various embodiments of the present disclosure. The above storage medium includes various media that may store program codes, such as a Universal Serial Bus (USB) flash disk, a mobile hard disk, a Read-Only Memory (ROM), or a Random Access Memory (RAM), a magnetic disk, an optical disk, or the like.

The embodiments of the present disclosure also provide a processor-readable storage medium storing therein a computer program, wherein the computer program is used to be executed by a processor to implement the method described above.

The processor-readable storage medium may be any available medium or data storage device that the processor can access, including but not limited to: magnetic memory (e.g. floppy disk, hard disk, magnetic tape, Magneto-Optical disk (MO), etc.), optical memory (e.g. Compact Disc (CD), Digital Video Disk (DVD), Blu-ray Disc (BD), High-definition Versatile Disc (HVD), etc.), and semiconductor memory (e.g. ROM, Electric Programmable Read Only Memory (EPROM), Electrically Erasable Programmable Read Only Memory (EEPROM), non-volatile memory (NAND flash), Solid State Disk (SSD)), etc.

The person skilled in the art will appreciate that the embodiments of the present disclosure may be provided as methods, systems or computer program products. Therefore, the present disclosure may take a form of entirely hardware embodiments, entirely software embodiments or embodiments combining software and hardware aspects. Moreover, the present disclosure may take a form of a computer program product implemented on one or more computer available storage medium (including, but not limited to, disk storage, optical storage, etc.) containing computer available program codes therein.

The present disclosure is described with reference to flowcharts and/or block diagrams of methods, devices (systems) and computer program products according to the embodiments of the present disclosure. It should be understood that each flow and/or block in the flowcharts and/or block diagrams, as well as combinations of flows and/or blocks in the flowcharts and/or block diagrams, may be implemented by computer executable instructions. These computer-executable instructions may be provided to processors of a general purpose computer, a special purpose computer, an embedded processor, or other programmable data processing devices to generate a machine, such that instructions executed by the processor of the computer or other programmable data processing devices generate apparatuses that implement functions specified in one or more flows of a flowchart and/or one or more blocks of a block diagram.

These processor-executable instructions may also be stored in a processor-readable memory capable of directing a computer or other programmable data processing devices to operate in a specific manner, such that the instructions stored in the processor-readable memory generate an article of manufacture including instruction apparatuses that implement functions specified in one or more flows of a flowchart and/or one or more blocks of a block diagram.

These processor-executable instructions may also be loaded onto a computer or other programmable data processing devices, such that a series of operational steps is executed on the computer or other programmable devices to generate computer-implemented processing, such that the instructions executed on the computer or other programmable devices provide steps for implementing functions specified in one or more flows of a flowchart and/or one or more blocks of a block diagram.

It should be noted that a division of the above modules is only a division of logical functions, which may be fully or partially integrated into a physical entity or physically separated during actual implementation. These modules may all be implemented in a form of software calling processing elements; they may also be implemented in a form of hardware; some modules may also be implemented in a form of software called by processing elements, and some modules may be implemented in a form of hardware. For example, a determination module may be an independent processing element, or may be integrated into a chip of the aforementioned apparatus, and may be stored in a memory of the aforementioned apparatus in a form of program code, and functions of the determination module may be called and executed by a processing element of the aforementioned apparatus. Implementation of other modules is similar. In addition, all or a part of these modules may be integrated together or implemented independently. The processing element described herein may be an integrated circuit with signal processing capabilities. During an implementation process, the steps of the above method or modules may be accomplished by integrated logic circuits of hardware in a processor element or by instructions in a form of software.

For example, each module, unit, sub-unit, or sub-module may be one or more integrated circuits configured to implement the above methods, such as one or more Application Specific Integrated Circuits (ASICs), or one or more Microprocessors (DSPs), or one or more Field Programmable Gate Arrays (FPGAs), etc. For another example, when one of the above modules is implemented in a form of a processing element calling the program code, the processing element may be a general purpose processor, such as a Central Processing Unit (CPU) or another processor that may call the program code. For another example, these modules may be integrated and implemented in a form of System-On-a-Chip (SOC).

Terms "first", "second" and the like in the specification and claims of the present disclosure are used to distinguish similar objects and do not necessarily need to describe a particular order or sequence. It should be understood that data thus used may be interchanged under appropriate circumstances, so that the embodiments of the present disclosure described herein are implemented in an order other than those illustrated or described herein, for example. Furthermore, terms "including" and "having" and any variations thereof are intended to cover non-exclusive inclusion, for example, processes, methods, systems, products, or devices that include a series of steps or units need not be limited to those clearly listed, but may include other steps or units that are not clearly listed or are inherent to these processes, methods, products, or devices. In addition, use of "and/or" in the specification and the claims indicates at least one of connected objects, for example, A and/or B and/or C indicates seven cases including single A, single B, single C, both A and B, both B and C, both A and C, and all A, B and C. Similarly, use of "at least one of A and B" in this specification and the claims should be understood as "single A, single B, or both A and B".

Obviously, the person skilled in the art may make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to encompass these modifications and variations.

## Claims

1. A data transmission method performed by a network device, comprising:
obtaining presentation requirement information of a target service; and
when transmitting a plurality of Quality of Service (QoS) flows of the target service to at least one terminal, lowering a QoS guarantee level of a target QoS flow or suspending a transmission of the target QoS flow according to the presentation requirement information,
wherein the target QoS flow is one or more of the plurality of QoS flows of the target service.

2. The data transmission method according to claim 1, wherein lowering the QoS guarantee level of the target QoS flow or suspending the transmission of the target QoS flow according to the presentation requirement information comprises:
determining a plurality of QoS flows and/or a plurality of QoS flow groups belonging to the target service, wherein each of the plurality of QoS flow groups comprises at least one of the plurality of QoS flows;
determining a target QoS flow group from the plurality of QoS flow groups according to the presentation requirement information, wherein the target QoS flow group is one or more of the plurality of QoS flow groups; and
lowering a QoS guarantee level of the target QoS flow group, or suspending a transmission of the target QoS flow group.

3. The data transmission method according to claim 2, wherein the plurality of QoS flow groups is determined by at least one of:
taking QoS flows presenting a same orientation as a group;
grouping QoS flows according to different definitions presented; or
taking QoS flows that interact with each other as a group.

4. The data transmission method according to claim 1, wherein the presentation requirement information comprises at least one of:
location information of a user;
a channel quality detection result; or
user requirement information comprising whether the user allows a reduction in quality of service presentation, and/or whether the user requests a reduction in transmission rate.

5. The data transmission method according to claim 1, wherein obtaining the presentation requirement information of the target service comprises:
receiving the presentation requirement information transmitted by the at least one terminal.

6. The data transmission method according to claim 1, wherein transmitting the plurality of QoS flows of the target service to the at least one terminal comprises one of:
transmitting the plurality of QoS flows of the target service to one terminal;
transmitting parts of the plurality of QoS flows of the target service to a plurality of terminals, respectively, to enable the plurality of terminals to jointly present the target service; and
transmitting a part of the plurality of QoS flows of the target service to the at least one terminal, to enable the network device and the at least one terminal to jointly present the target service.

7. The data transmission method according to claim 1, wherein after lowering the QoS guarantee level of the target QoS flow or suspending the transmission of the target QoS flow according to the presentation requirement information, the method further comprises:
in the case that there is a plurality of network devices that transmits the target service, transmitting current QoS information of the target service to other network devices, to enable the other network devices to synchronously update the QoS information of the target service.

8. The data transmission method according to claim 2, wherein in the case of transmitting the plurality of QoS flows of the target service to the at least one terminal, the method further comprises:
carrying a group identity of each of the QoS flows by at least one of:
carrying the group identity of each of the QoS flows on a data frame;
carrying the group identity of each of the QoS flows on an Internet Protocol (IP) packet carrying the data frame;
carrying the group identity of each of the QoS flows on a data packet of the QoS flow; and
carrying the group identity of each of the QoS flows on a layer 2 packet of a Radio Access Network (RAN).

9. A data transmission method performed by a terminal, comprising:
receiving a plurality of QoS flows of a target service transmitted by a network device,
wherein a QoS guarantee level of a target QoS flow of the target service is lowered or a transmission of the target QoS flow of the target service is stopped, and the target QoS flow is one or more of the plurality of QoS flows of the target service.

10. The data transmission method according to claim 9, wherein before receiving the plurality of QoS flows of the target service transmitted by the network device, the method further comprises:
transmitting presentation requirement information of the target service to the network device.

11. The data transmission method according to claim 10, wherein the presentation requirement information comprises at least one of:
location information of a user;
a channel quality detection result; or
user requirement information comprising whether the user allows a reduction in quality of service presentation, and/or whether the user requests a reduction in transmission rate.

12. The data transmission method according to claim 9, wherein the target QoS flow is a target QoS flow group determined from a plurality of QoS flow groups of the target service,
wherein the target QoS flow group is one or more of the plurality of QoS flow groups.

13. The data transmission method according to claim 12, wherein the plurality of QoS flow groups is determined by at least one of:
taking QoS flows presenting a same orientation as a group;
grouping QoS flows according to different definitions presented; or
taking QoS flows that interact with each other as a group.

14. The data transmission method according to claim 12, wherein after receiving the plurality of QoS flows of the target service transmitted by the network device, the method further comprises:
obtaining a group identity of each of the QoS flows by at least one of:
obtaining a group identity of each of the QoS flows carried on a data frame;
obtaining a group identity of each of the QoS flows carried on an IP packet carrying the data frame;
obtaining a group identity of each of the QoS flows carried on a data packet of the QoS flow; or
obtaining a group identity of each of the QoS flows carried on a layer 2 packet of a RAN.

15. A network device comprising: a transceiver, a memory, a processor, and a computer program stored in the memory and used to be executed by the processor, wherein the processor is configured to read the program in the memory to implement the following:
obtaining presentation requirement information of a target service; and
when transmitting a plurality of QoS flows of the target service to at least one terminal, lowering a QoS guarantee level of a target QoS flow or suspending transmission of the target QoS flow according to the presentation requirement information, wherein the target QoS flow is one or more of the plurality of QoS flows of the target service.

16. The network device according to claim 15, wherein the processor is further configured to read the computer program in the memory to implement the following:
determining a plurality of QoS flows and/or a plurality of QoS flow groups belonging to the target service, wherein each of the plurality of QoS flow groups comprises at least one of the plurality of QoS flows;
determining a target QoS flow group from the plurality of QoS flow groups according to the presentation requirement information, wherein the target QoS flow group is one or more of the plurality of QoS flow groups; and
lowering the QoS guarantee level of the target QoS flow group, or suspending transmission of the target QoS flow group.

17. The network device according to claim 16, wherein the plurality of QoS flow groups is determined by at least one of:
taking QoS flows presenting a same orientation as a group;
grouping QoS flows according to different definitions presented; or
taking QoS flows that interact with each other as a group.

18. The network device according to claim 15, wherein the presentation requirement information comprises at least one of:
location information of a user;
a channel quality detection result; or
user requirement information comprising whether the user allows a reduction in quality of service presentation, and/or whether the user requests a reduction in transmission rate.

19. The network device according to claim 15, wherein the processor is further configured to read the computer program in the memory to implement the following:
receiving the presentation requirement information transmitted by the at least one terminal.

20. The network device according to claim 15, wherein the processor is further configured to read the computer program in the memory to perform at least one of the following:
transmitting the plurality of QoS flows of the target service to one terminal;
transmitting parts of the plurality of QoS flows of the target service to a plurality of terminals, respectively, to enable the plurality of terminals to jointly present the target service; or
transmitting a part of the plurality of QoS flows of the target service to the at least one terminal, to enable the network device and the at least one terminal to jointly present the target service.

21. The network device according to claim 15, wherein the processor is further configured to read the computer program in the memory to implement the following:
in the case that there is a plurality of network devices that transmits the target service, transmitting current QoS information of the target service to other network devices, to enable the other network devices to synchronously update the QoS information of the target service.

22. The network device according to claim 15, wherein the processor is further configured to read the computer program in the memory to implement the following:
carrying a group identity of each of the QoS flows by at least one of:
carrying the group identity of each of the QoS flows on a data frame;
carrying the group identity of each of the QoS flows on an IP packet carrying the data frame;
carrying the group identity of each of the QoS flows on a data packet of the QoS flow; or
carrying the group identity of each of the QoS flows on a layer 2 packet of a RAN.

23. A terminal comprising: a transceiver, a memory, a processor, and a computer program stored in the memory and used to be executed by the processor, wherein the processor is configured to read the program in the memory to implement the following:
receiving a plurality of QoS flows of a target service transmitted by a network device,
wherein a QoS guarantee level of a target QoS flow of the target service is lowered or a transmission of the target QoS flow of the target service is stopped, and the target QoS flow is one or more of the plurality of QoS flows of the target service.

24. The terminal according to claim 23, wherein the processor is further configured to read the computer program in the memory to implement the following:
transmitting presentation requirement information of the target service to the network device.

25. The terminal according to claim 24, wherein the presentation requirement information comprises at least one of:
location information of a user;
a channel quality detection result; or
user requirement information comprising whether the user allows a reduction in quality of service presentation, and/or whether the user requests a reduction in transmission rate.

26. The terminal according to claim 23, wherein the target QoS flow is a target QoS flow group determined from a plurality of QoS flow groups of the target service,
wherein the target QoS flow group is one or more of the plurality of QoS flow groups.

27. The terminal according to claim 26, wherein the plurality of QoS flow groups is determined by at least one of:
taking QoS flows presenting a same orientation as a group;
grouping QoS flows according to different definitions presented; or
taking QoS flows that interact with each other as a group.

28. The terminal according to claim 26, wherein the processor is further configured to read the computer program in the memory to implement the following:
obtaining a group identity of each of the QoS flows by at least one of:
obtaining a group identity of each of the QoS flows carried on a data frame;
obtaining a group identity of each of the QoS flows carried on an IP packet carrying the data frame;
obtaining a group identity of each of the QoS flows carried on a data packet of the QoS flow; or
obtaining a group identity of each of the QoS flows carried on a layer 2 packet of a RAN.

29. A data transmission apparatus applied to a network device, comprising:
an obtaining module configured for obtaining presentation requirement information of a target service; and
a first processing module configured for lowering a QoS guarantee level of a target QoS flow or suspending transmission of the target QoS flow according to the presentation requirement information when transmitting a plurality of QoS flows of the target service to at least one terminal, wherein the target QoS flow is one or more of the plurality of QoS flows of the target service.

30. A data transmission apparatus applied to a terminal, comprising:
a first receiving module configured for receiving a plurality of QoS flows of a target service transmitted by a network device, wherein a QoS guarantee level of a target QoS flow of the target service is lowered or a transmission of the target QoS flow of the target service is stopped, and the target QoS flow is one or more of the plurality of QoS flows of the target service.

31. A processor-readable storage medium storing therein a computer program, wherein the computer program is used to be executed by a processor to implement the method according to any one of claims 1 to 14.
